# EUROPEAN PATENT APPLICATION

(11) **EP 2 505 430 A2**
(43) Date of publication of application: **03.10.2012**
(21) Application number: 12425055.6
(22) Date of filing: 19.03.2012
(51) Int. Cl.: B60Q 1/26, B60Q 1/52, F21S 10/06, F21Y 101/02

(54) **Lighting device, in particular light signaling supplementary device for rescue and emergency prioritary vehicles, heavy transports and vehicles, work machinery**

(30) Priority: 29.03.2011 IT RM20110158
(71) Applicant: Intav S.R.L., 00040 Ariccia - Roma (IT)
(72) Inventor: Franceschelli, Luciano, 00040 Ariccia (RM) (IT)
(74) Representative: Perronace, Andrea

(57) **Abstract**

The invention concerns a lighting device (100) comprising a light source (141, 142, 143) placed on a disposition plane and a semi-parabolic reflector body (120) for the conveying of the light within a predefined exit angular aperture of ± a of the light beam with respect to said disposition plane, and wherein the semi-parabolic reflector body (120) is suitable to be rotated around a rotation axis (150) that passes in correspondence of a center of said light source (141, 142, 143) and is perpendicular to said disposition plane, in such a way to obtain a light beam which spans a predefined maximal angle around said light source, the lighting device being characterized in that:
- the light source is constituted by three or more LEDs (141, 142, 143) which are placed on corresponding application points on said horizontal plane and provide an overall emission beam;
- said rotation axis (150) passes substantially through the center of the circumference of maximum radius *r* passing through the application points of at the least three LEDs among said three or more LEDs and enclosing all said application points of said three or more LEDs (141,142,143);
- said maximum radius *r* is equal or larger than 2.3 mm;
- said semi-parabolic reflector body is a portion of a parabola having a parabolic symmetry axis (160) perpendicular to said rotation axis (150);

said disposition plane whereon said three or more LEDs (141, 142, 143) are disposed is placed at a distance d from the focus of said parabola, distance d being predetermined in such a way that an application point of an equivalent source of said overall emission beam finds itself substantially on said focus.

## Description

The present invention concerns a lighting device, in particular light signaling supplementary device for rescue and emergency prioritary vehicles, heavy transports and vehicles, work machinery.

More in detail, the lighting device according to the invention is a device of supplementary light signaling to be used, for example, on vehicles that are on emergency and rescue service, and more in particular a light signaling device that incorporates LED light emitters inside an only parabolic cavity which is suited to convey the light beams in a predefined circular sector, and to rotate on the 360° angle without loss of continuity.

Regulation ECE no. 65 provides the rules for the homologation of the alarm light signaling devices which can be installed on rescue and emergency prioritary vehicles, as well as on work machinery and heavy transports and vehicles (automotive product) at the ECE level (nations as listed in the regulation, among which there is Europe and many other extra-community countries).

In this regard, for example, U.S.A., Canada and other countries connected to them use regulations/directives different but very similar in the substance, which must be applied in the case of introduction of these products in their market.

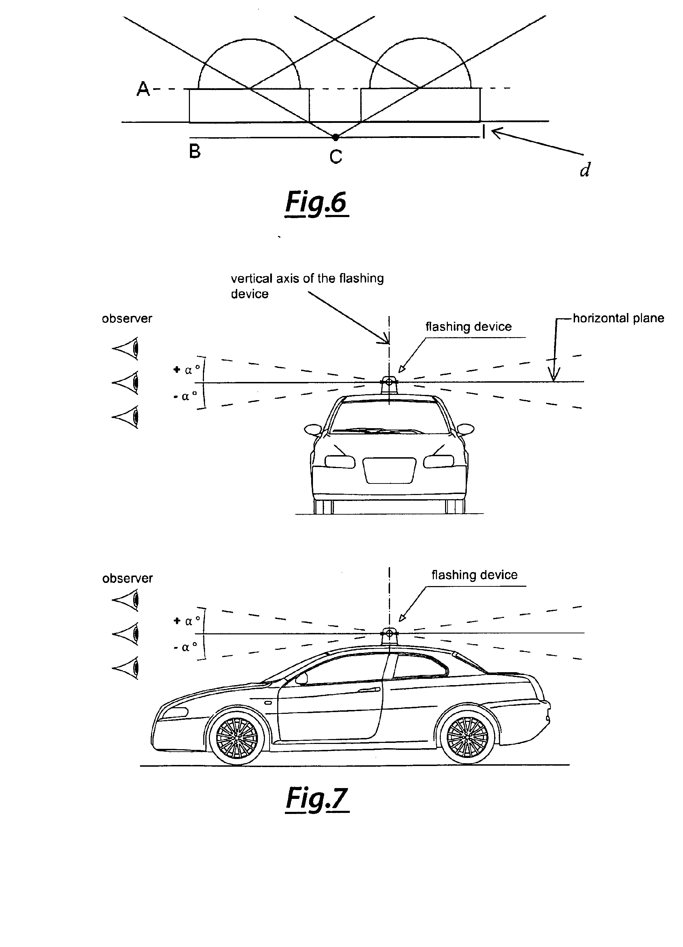

The main prescriptions of the regulation no. 65 to be fulfilled, besides the colorimetric characteristics, are measurements of the intensity of effective light emitted by the devices, which must be detected at a distance of 25 m over an angle of 360° on the horizontal plane (the horizontal plane is intended with respect to a vertical axis of the device) and over vertical angles of +-4° or +-8° with respect to the horizontal plane as a function of the adopted color's, as illustrated in figure 7, wherein for the sake of generality a generic angle α of observation of the light device has been indicated (so that it holds for different regulations).

The light is measured in effective candelas to average it according to the human eye (i.e. one takes into account, within the mathematical formula of determination of effective intensity, the permanence of light on the retina of the human eye).

Other basic homologation prescriptions included in the Regulation no. 65 are the limits imposed for the time on, time off, the flashing frequency comprised between 2 and 4 Hz to the end of guaranteeing the effectiveness of the alarm action of the signaling device.

Other prescriptions concern the various realization typologies of the devices, photometric characteristics, tests against rain, conformity to mass production, application marks to be put thereon etc.

The homologation of the device is granted by the Transport Ministry of the various countries upon execution and passing of the tests as prescribed e.g. in Regulation no.65.

The main traditional devices of light signaling consist of a halogen lamp around which a parabolic mirror is made rotating, which direct the light making it turn over the 360°.

The limits of such a device are in the lifetime of the halogen lamp and in the energy consumption of the same. LED (Light Emitting Diode) lamp are known which lifetime is 100 times longer than that of halogen lamps or of other type. The power-LEDs however suffer of the nontrivial inconvenience of the thermal dissipation. Indeed, they heat up rapidly and, if not suitably dissipated, they achieve comparatively high temperatures which entail a remarkable shortening of the lifetime of the LEDs and even their breaking.

The efficient collection and conveying of the light rays become therefore fundamental to exploit at most the produced light and therefore to minimize the power of the LED to be used to a given end. The collection and conveying depends, in turn, on the choice of the LEDs, both for the number and for the reciprocal positioning.

LED flashing devices are known which reproduced the 360° rotating effect by sequentially switching on and off LEDs placed on a circumference subtended by fixed reflecting semi-parabolic surfaces for light beams conveying. Such devices are not convenient because only one LED at a time emits the light beam and many LEDs are needed to realize the device.

It is object of the present invention to provide a LED light signaling device which is actually rotating, in particular light signaling supplementary device for rescue and emergency prioritary vehicles, heavy transports and vehicles, work machinery, which solves the problems and overcomes drawbacks of the known prior art.

It is subject matter of the present invention a lighting device comprising a light source placed on a disposition plane and a semi-parabolic reflector body for the conveying of the light within a predefined exit angular aperture of ± α of the light beam with respect to said disposition plane, and wherein the semi-parabolic reflector body is suitable to be rotated around a rotation axis that passes in correspondence of a center of said light source and is perpendicular to said disposition plane, in such a way to obtain a light beam which spans a predefined maximal angle around said light source,
the lighting device being **characterized in that**:
- the light source is constituted by three or more LEDs which are placed on corresponding application points on said horizontal plane and provide an overall emission beam;
- said rotation axis passes substantially through the center of the circumference of maximum radiums passing through the application points of at the least three LEDs among said three or more LEDs and enclosing all said application points of said three or more LEDs;
- said maximum radius *r* is equal or larger than 2.3 mm;
- said semi-parabolic reflector body is a portion of a parabola having a parabolic symmetry axis perpendicular to said rotation axis;
- said disposition plane whereon said three or more LEDs are disposed is placed at a distance *d* from the focus of said parabola, distance *d* being predetermined in such a way that an application point of an equivalent source of said overall emission beam finds itself substantially on said focus.

The above definition of maximum radius r is given in order to include also the case, illustrated in the following, of 6 LED arranged in such a way that two of them are inside the circumference passing through the other ones. This definition holds for a larger amount of LEDs as well.

Preferably according to the invention, three LEDs are used.

Preferably according to the invention, four LEDs are used.

Preferably according to the invention, said maximum radius *r* is comprised between 2.3 and 3.3 mm.

Preferably according to the invention, three LEDs are used and said maximum radius *r* is comprised between 2.5 and 2.9 mm.

Preferably according to the invention, six LEDs are used, and said maximum radius *r* is comprised between 3.8 and 5.2 mm.

Preferably according to the invention, six LEDs are used, and said maximum radius r is comprised between 4 and 4.8 mm.

Preferably according to the invention, said pre-defined maximum angle is equal to 360° .

Preferably according to the invention, said three or more LEDs are Lambertian LEDs.

Preferably according to the invention, said semi-parabolic reflector body is a hollow body in polycarbonate.

Preferably according to the invention, the internal parabolic-section surface of said semi-parabolic reflector body is reflecting and bright.

Preferably according to the invention, in front of each LED of said three or more LEDs, at a predefined distance from it, an optical group is placed for focusing the light beam emitted from the LED.

Preferably according to the invention, the lighting device comprises a transparent cap cover which covers said three or more LEDs and the reflector body.

Preferably according to the invention, in said transparent cap cover an optical group is integrally formed, which is suitable to improve the distribution of the light over 360°.

Preferably according to the invention, in that said three or more LEDs are disposed on the vertexes of a regular polygon with corresponding three or more vertexes, on said disposition plane.

The invention will be no described by way of illustration but not by way of limitation, with particular reference to figures of the annexed drawings, wherein:
- figure 1 shows an emergency signaling rotating lamp (rotational device with a halogen lamp) in front view (a) and from above (b) without the protection and covering lampshade which is instead shown in (c);
- figure 2 shows a perspective view of an embodiment of the lighting device according to the present invention;
- figure 3 shows a front view of the device of figure 2;
- figure 4 shows the section A-A as indicated in figure 3;
- figure 5 shows a preferred embodiment of the LEDs in the devices of the previous figures;
- figure 6 shows a picture of the disposition of the LEDs in an embodiment of the device according to the invention: (A) emission plane, (B) reflector focus plane, (C) reflector focus point;
- figure 7 shows the different sighting directions of a vehicle having a flashing device according to the prescriptions of the current homologation regulations;
- figure 8 shows the disposition geometries of the LEDs in as many tested embodiments of the device according to the invention;
- figure 9 shows the different angular emissions, normalized with respect to the measured maximal value, of the device according to the invention using blue LEDs, in the cases of 1 LED (*r* = 0 mm) and 3 LEDs (*r* = 2.5-8mm) wherein *r* represents the radius of the circle passing through the centers of the LEDs;
- figure 10 shows different normalized angular emissions of a device according to the invention using white light LEDs with a cap/filter of amber color, in the cases of 1 LED (*r* = 0 mm) and 3 LEDs (*r* = 2.5-8mm);
- figure 11 shows the different normalized angular emissions of the device according to the invention using blue LEDs, in the case of 4 LEDs (r = 2.5-5mm);
- figure 12 shows the different normalized angular emissions of the device according to the invention using white light LED with cap/filter of amber color, in the case of 4 LEDs (*r* = 2.5-5mm);
- figure 13 shows the different normalized angular emissions of the device according to the invention using blue LEDs, in the case of 6 LEDs (*r* = 4-5mm), in the various dispositions of figure 8;
- figure 14 shows the different normalized angular emissions of the device according to the invention using white light LED with cap/filter of amber color, in the case of 6 LEDs (*r* = 4-5mm), in the different dispositions of figure 8;
- figure of 15 shows two thermal images of the dissipating body of the device containing the LED sources, for different values of radius *r* of spacing between the LEDs and current intensity *I* supplied to the LEDs: (a) 1 LED (*r* = 0), 1= 1 A; (b) 3 LED, *r* = 2.5 mm, *I* **=** 0.3A, wherein the hottest regions are represented by white and grey with increasing darkness as the temperature decreases, the coldest regions are represented by grey with a texture made by small circles, circles and triangles in the order with decreasing temperature;

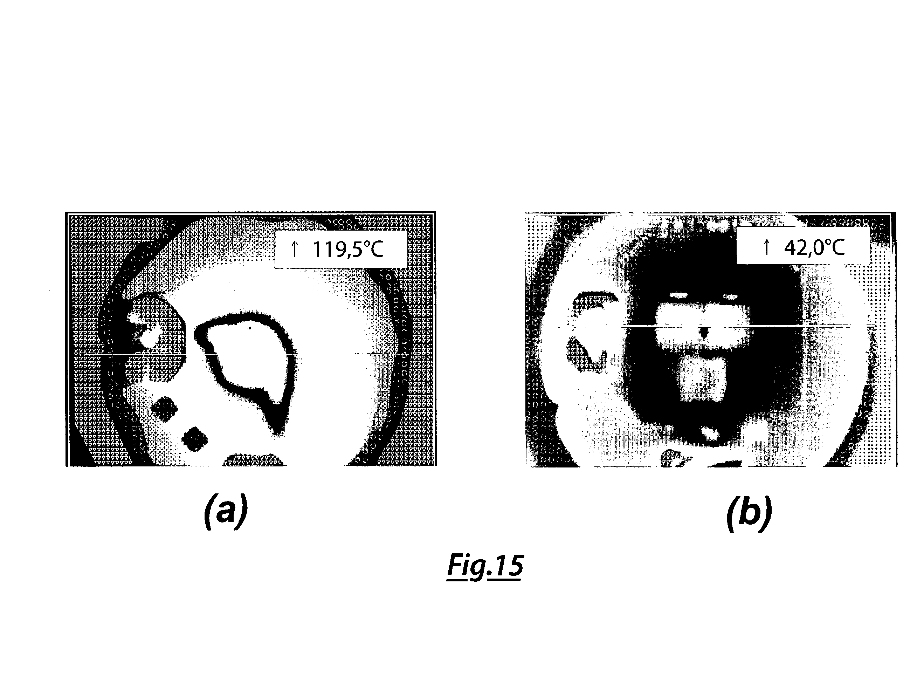

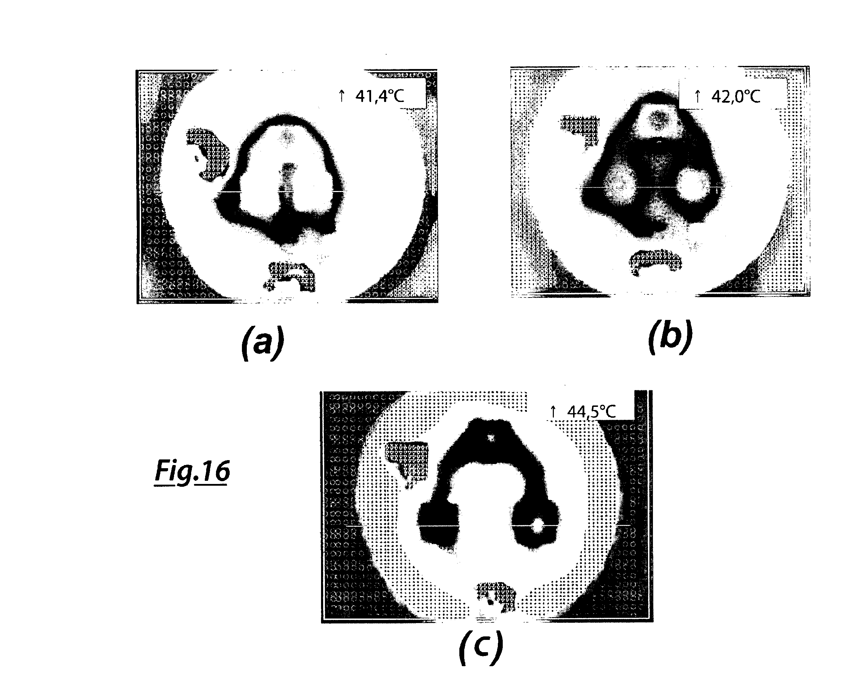

- figure 16 shows as in figure 15 three further thermal images of the dissipating body of the device containing the LED sources for different values of radiums *r* of spacing between the LEDs and current intensity *I* supplied to the LEDs: (a) 3 LED, *r* = 3 mm, *I* = 0.3 A; (b) 3 LED, *r* = 4 mm, *I* = 0.3 A; (c) 3 LED, *r* = 5 mm, *I* = 0.3 A, with the same representation convention as in figure 15.

In the figures, equal references will be used for equal elements.

For the sake of description easiness, in the following an only embodiment of the device according to the invention will be described, however it is to be understood that many other embodiments are possible using the same inventive concept. In particular, it is to be stressed that the essential features of the invention can be implemented both in a device with circular form and in a device that sends light in a predetermined main direction with predefined angles.

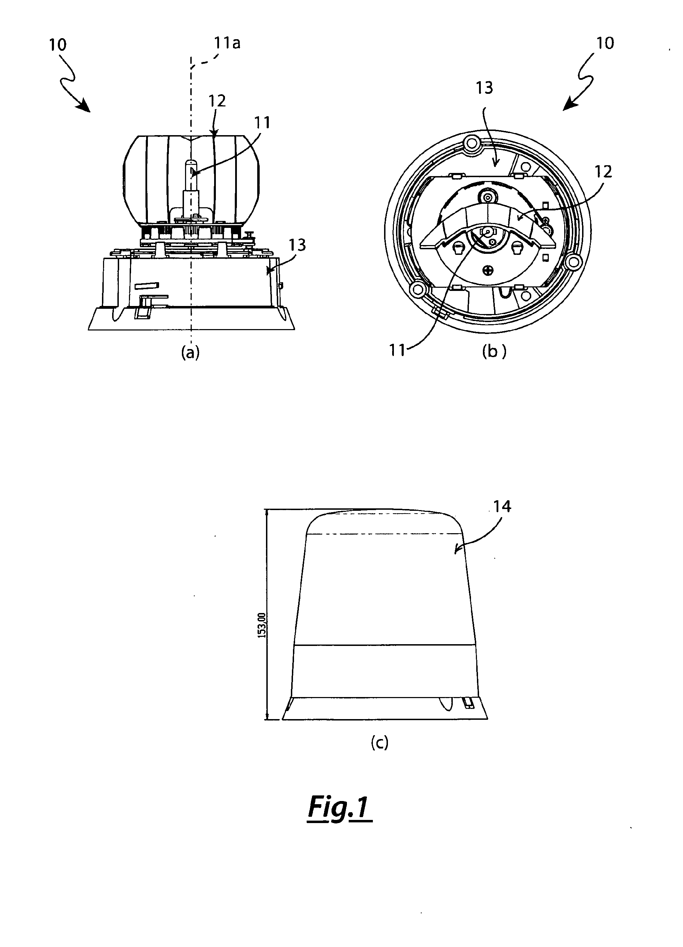

Making reference to figure 1, a light signaling device 10 according to the prior art consists of a filament electric light bulb 11 centrally above a base 13 of the device 10. The light bulb has symmetry axis 11a oriented vertically with respect to the base 13 and therefore sends its light rays over 360° around such a symmetry axis.

A parabolic mirror 12, which is adapted to rotate around said symmetry axis 11 a, screens the light produced by the lamp 11 for all the directions except that identified by the concavity of the parabola (axis of the parabola). In the base 13 a motor is provided which operates the rotation of the parabola 12.

Finally, a transparent (colored) bell-shaped covering 14 (cap) with symmetry axis coinciding with the axis 11 a is suitable to be placed on the base 13 and is dimensioned in such a way to contain both the lamp 11 and the parabola 12.

The dimensioning of the parabola 12 is therefore limited to the dimensions of the bell-shaped transparent covering 14.

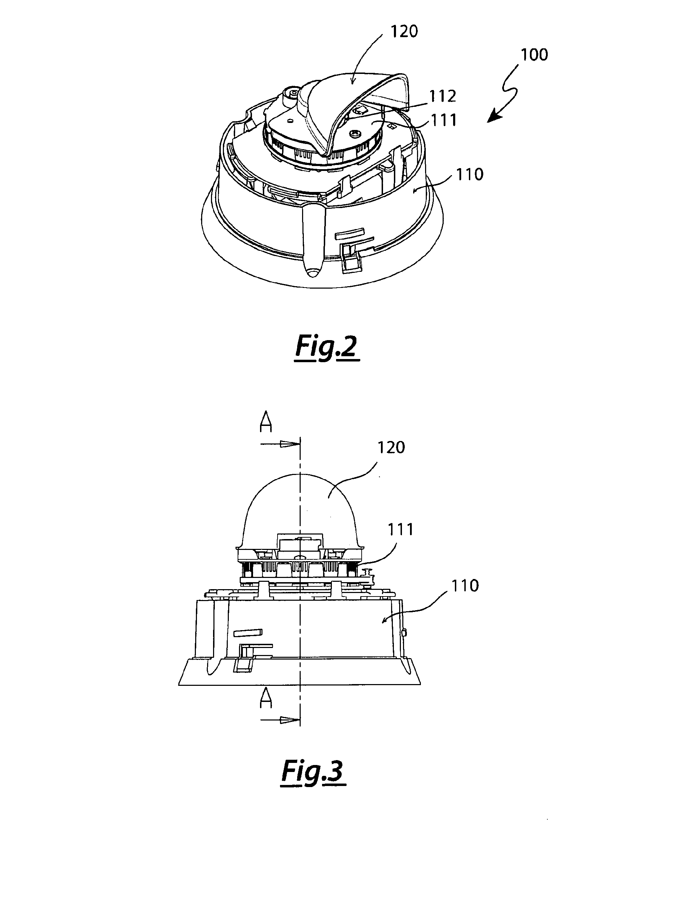

Making now reference to figure 2 to 5, the device according to the invention is formed by a first fixed base 110 containing a rotational motor and whereon a second rotating base 111 is placed.

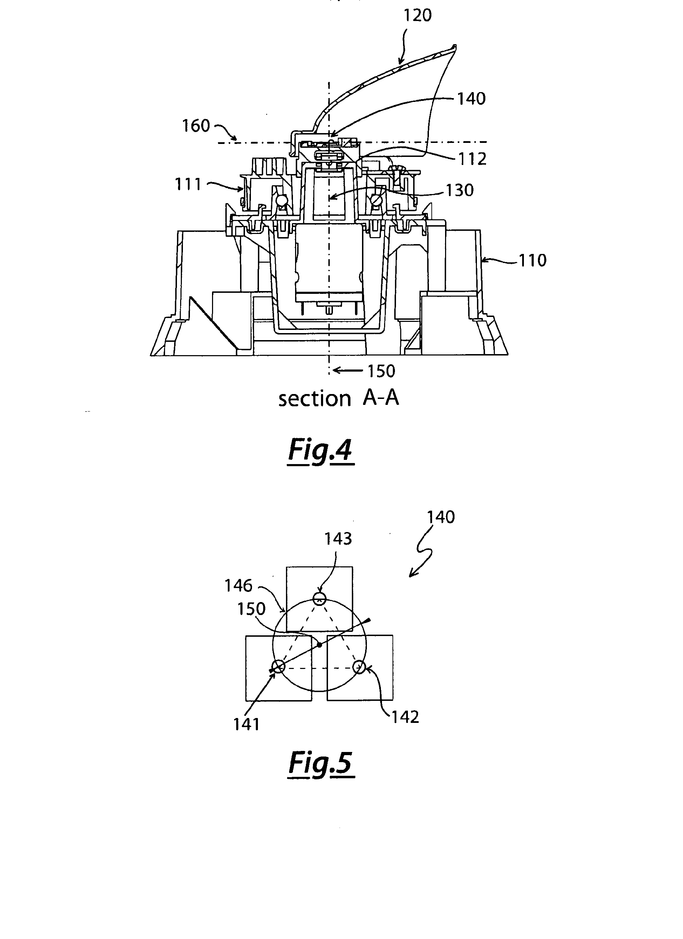

On the rotating base 111 a reflecting body 120 is fixed which is substantially a parabolic mirror. The rotating base, as it is clear from the section of figure 4, is holed in the centre, wherefrom instead a fixed internal base 112 protrudes, on which three LEDs 141, 142, 143 are fixed (referred to as a whole by reference 140). These LEDs are in contact with a heat dissipation block 130 housed below the base 112.

The disposition of the three LEDs is symmetrical around the rotation axis of the rotating base 111, which is an axis 150 usually perpendicular to the flat lower surface of the fixed base 110. At least three LEDs are chosen to guarantee a symmetrical disposition around the axis 150, and therefore a light emission as much homogeneous as possible over the 360° of the plane of the base 112 (also called LED disposition plane, i.e. a plane passing though the base 112 and perpendicular to the drawing sheet).

The LEDs can be even more than three, disposed preferably on the vertexes of a regular polygon which has its centre in a point of the axis 150 and inscribes in a circumference of radius *r*. Preferably, *r* is at most 4 mm, preferably not larger than 2.5 mm. From the carried out experiments, it has been clearly derived that, within the limits imposed by the dimensions of the same LEDs, *r* must be chosen as the lowest one that maximize the collection and diffusion of the light.

The disposition of the LEDs along the height (i.e. the height from the disposition plane of the three LEDs along the symmetry axis 150) is determined as a function of the focus of the parabola 120, more precisely of the ideal parabola of which the parabolic mirror 120 is essentially a branch.

More precisely, making reference to figure 6, the disposition plane, on which the LEDs are arranged, has been positioned at a height different from that of the focus of the parabola. Indeed, since there was at disposal not one light sources but (at least) three different ones, if the LEDs had been at the same height as the focus of the parabola, the resulting emission beam would have had an equivalent source which would have found itself out of focus, not exploiting completely the optical properties of the reflector. To obviate this disadvantage, the LEDs disposition plane has been shifted towards the reflector in order that the equivalent source of the overall emission beam of the source 140 finds itself at a height corresponding to the focus of the reflector.

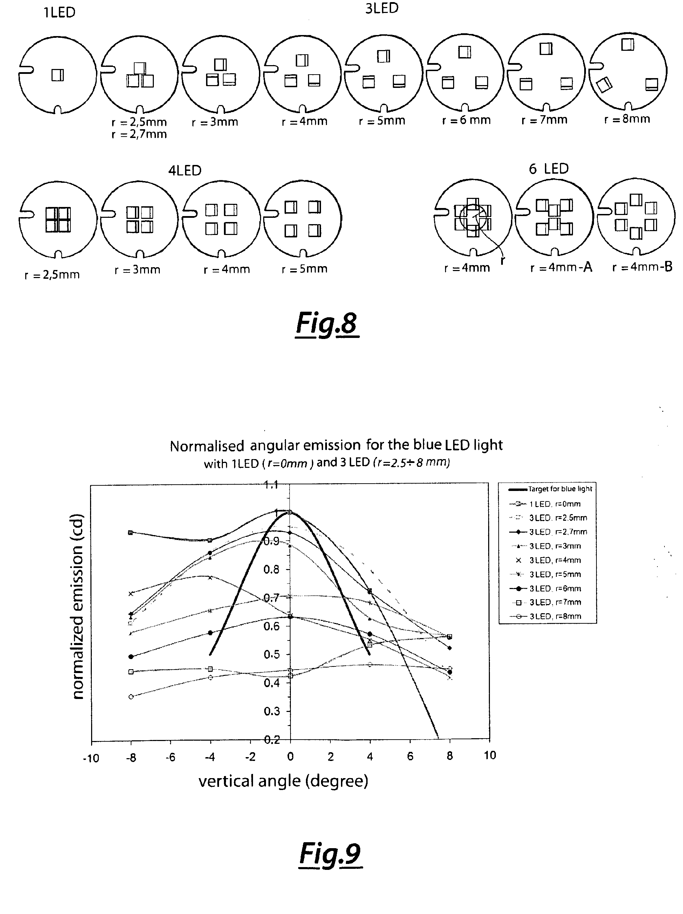

Making now reference to figure 8 and subsequent figures, some experiments carried out by the applicant are shown, which allowed to come up with the technical concept of the invention and to verify its effectiveness.

A group of experiments has been carried out with the disposition of the LEDs as illustrated in figure 8, wherein there are the reference configuration with only one LED and those according to the invention as the number of LEDs and the radius of the circumference, along which they are disposed, changes. In the case of six LEDs, three different geometrical dispositions of the LEDs have been tested, which are not all simply circular.

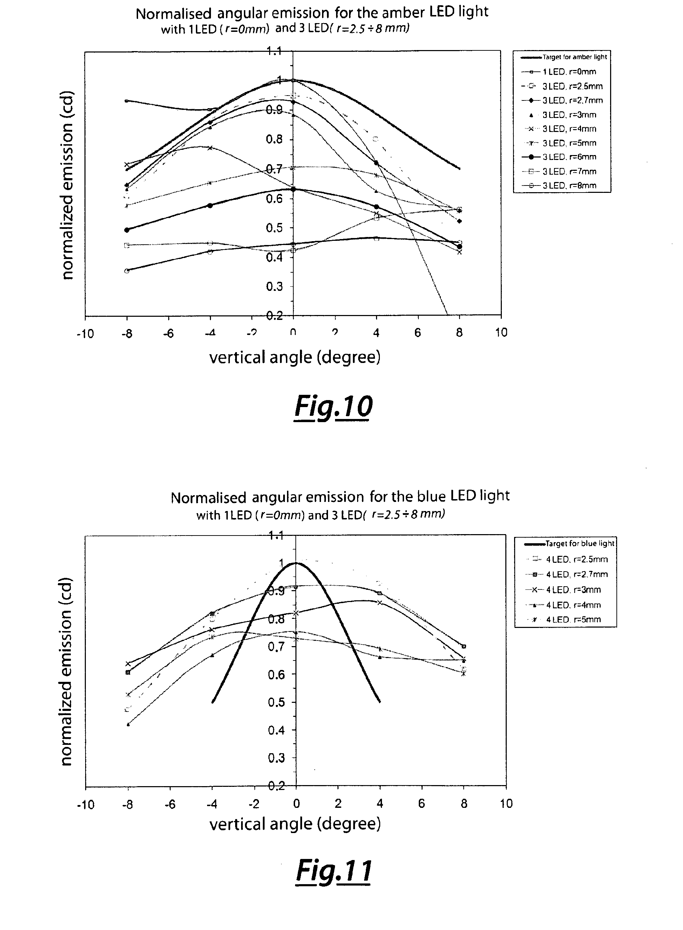

Making reference to figures 9 and 10, the graphs of the normalized emission light measured in candelas for the device according to the invention are shown, for different vertical angles (ordinates) as the LEDs disposition radiums *r* on the disposition plane changes. The emission curves are compared in figure 9 with the curve (boldfaced and without identification symbols) which has been preset as the target ideal curve (for the considered reference regulations) for the devices emitting blue light. In figure 10, the same emission curves are compared with the current target curve (boldfaced and without identification symbols) for the devices emitting light of amber color.

From the comparison of the curves of figure 9 and figure 10, one can note that the progression best fitting both the reference curves (blue and amber) is the curve corresponding to *r* = 2.5 mm which is the value of the radius chosen in the disposition of the 3 LEDs on the disposition plane the for the device according to the invention. The distribution of the emission values and intensity fou *r* ranging from 4 to 8 mm is instead unsatisfactory, whilst for *r* = 3 mm it is acceptable but still not optimized.

It is further to be noted that the curve relevant to the only LED of the prior art has a very asymmetric progression, even if regarding intensity it could be sufficient only in the blue case. Indeed, in the amber case, the decay of the emission for positive angles is too rapid and, as a consequence, the emission beam would not have the aperture which one would have liked to obtain. In addition, one was obliged to supply the only LED with a current intensity at least three times larger than the usual one to obtain comparable emissions, what influences the dissipation as demonstrated below in the following description.

Besides, as the radius *r* increases, one notes a deformation and a leveling of the curves of emission measured for vertical angles, what leads to a widening of the light beam emitted by the device, therefore to a moving away from the object of the invention which is the obtaining of an emission beam which concentrates the emitted light within the solid angle with vertical aperture (span) of +/-4° for the blue emission, and +/-8° for the "amber" emission.

Coming now to illustrate the experiments with 4 and 6 LEDs, carried out to the end of establishing the minimum an optimal amount of LED light sources to obtain the predetermined target in terms of light intensity, light power distribution, aperture of the light beam emitted by the reflector and dissipation of the heat generated by the LEDs. The 4 and 6 LEDs have been disposed in such a way to respect to as much as possible a circular symmetry and taking into account the minimum spaces required because of the physical dimensions of the individual LED.

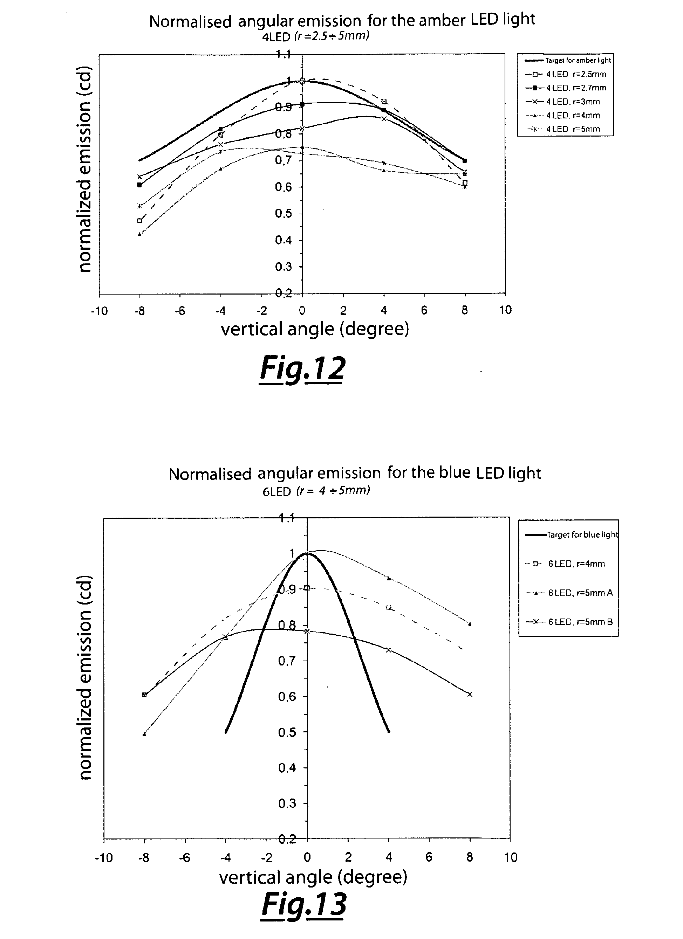

Making reference to figures 11 and 12, upon increasing the number of light sources to 4 LEDs, it has been observed that also in this case the optimal minimum radius for the LEDs disposition is equal to *r* = 2.5 mm. Indeed, by disposing the sources on a circumference of radius larger than 3 mm, one obtains a light beam from the reflector which comes out to be too much wide and/or asymmetric so that the light efficiency decreases and the fulfillment of the law regulations worsens.

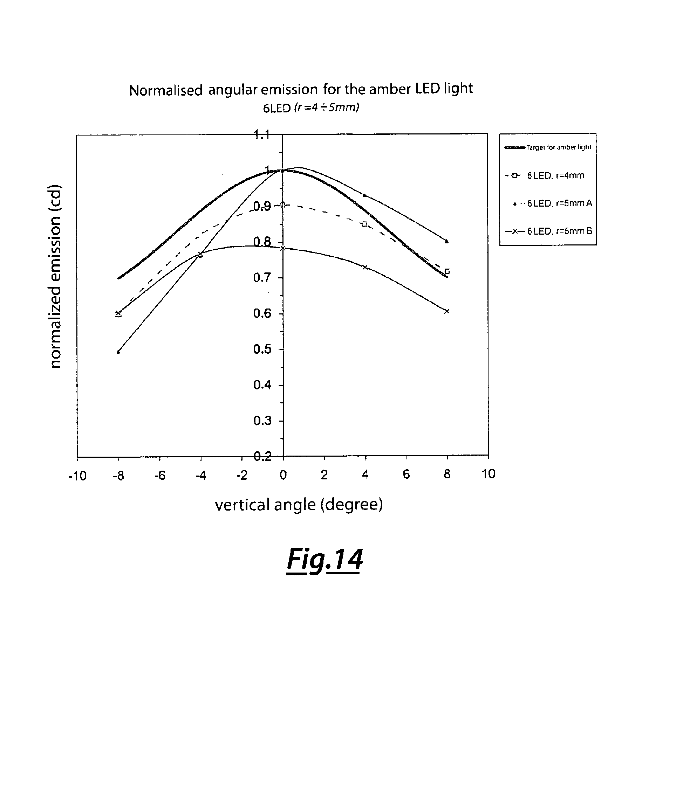

Making now reference to figures 13 and 14, for a number of sources equal to 6 LEDs, the physical dimensions of the utilized LEDs prevent a disposition on a circumference with the radius smaller than 4 mm. For such a large values, one however obtains a light distribution which is more symmetrical and uniform but less concentrated. Recalling indeed that the emission values indicated in the graphs are normalized and that each source is controlled by a current such to produce an overall light intensity equal to that of 1 LED placed in the focus of the semi-parabolic reflector, it appears to be evident that, upon increasing the number of sources, the measured light intensity peak decreases. Almost all the curves are acceptable although not optimized, however the use of 6 LED is more expensive, and by further increasing the radius the efficiency diminishes so much that one cannot think any longer to use a so constructed light device.

This owing to the fact that, on one hand, the individual LED must have a lower light intensity as just said, also in order not to increase the produced heat, and, on the other hand, because of the expansion of the equivalent light surface leading to a light beam with a larger angular aperture (span) and therefore to a lower light density.

Other experiments, not shown here for the sake of conciseness, have confirmed that in the case of 3 or 4 LEDs with *r* = 2.3 mm the result is still acceptable.

Therefore one has demonstrated that the optimal minimum radius for the disposition of the LEDs which represent the light sources of the device according to the invention is of around 2.3-2.5 mm with a minimum number of three light sources needed to obtain a light beam with predetermined aperture and intensity. The same experiments indicate that in the case of 3 or 4 LEDs one can go up to 3.3 mm obtaining an acceptable optical efficiency. The optimal solution is however between 2.5 and 2.9 mm.

Concerning the 6 LEDs, the radius is comprised between 3.8 and 5.2 mm, in the optimal way between 4 and 4.8 mm.

However, not only the influence of the radius on the intensity curve has been studied, but its influence on the heat dissipation as well.

Making reference to figures 15 and 16, thermal images of the device have been detected for different dimensions of the radius *r* of the circumference whereon the light sources are placed. The hottest regions are represented by white and grey with increasing darkness as the temperature decreases, the coldest regions are represented by grey with a texture made by small circles, circles and triangles in the order with decreasing temperature.

As one can see in figures 15 and 16, the improvement obtained in the passage from only one source to 3 sources is twofold: on one hand, one has a decrease of the temperature peak of the individual source, on the other hand one has an increase in the dissipation.

Indeed, in figure 15 (a) one sees that, with an only source, in order to obtain the light intensity needed to achieve the predetermined goal, one must provide the only LED with a current equal to around 330% (1 A) with respect to the condition with 3 sources (0.3 A), and therefore the amount of generated heat comes out to be very large. The peak temperature is slightly less than 120°C whilst the distribution area is limited to the LED dissipating section being connected to its physical dimensions. In figure 15 (b) one sees that the first improvement is obtained by dividing the source into 3 distinct points which are placed as much close to each other as possible. The temperature peak which is measured in such a way (42°C in the treated case, in general quoted on the upper right side in each figure), with equal measurement ambient conditions, comes out to be much lower. Indeed, being the sources three instead of one, it is sufficient a smaller current to be able to achieve the same light intensity levels. Moreover, in such a way, the useful dissipation area increases as well.

By increasing the dimension of the radius (figure 16 (a)-(c)), one obtains a further improvement concerning the heat dissipation owing to the fact that the sources are more spaced apart and the generated heat is dissipated much better because the thermal gradient increases between the generation point coinciding with the centre of each LED (white/dark grey regions) and the closest regions around (grey with a texture).

However increasing the radius more than *r* = 2.3-2.5 mm or increasing the number of sources beyond 3 LEDs, one has a worsening in the optical behavior.

The applicant is therefore come up with a compromise between the optical and thermal results. The configuration providing the optimal result is obtained by disposing 3 distinct light sources along a circumference with radiums comprised between 2.3 and 3.3 mm. The results are still good for the same radii with 4 LEDs. Concerning the 6 LEDs, sufficient results are obtained for values of the radius between 3.8 and 5.2 mm, optimum results are in the range 4 to 4.8 mm.

Each of the above features of the device according to the invention contributes in an essential or secondary way to the achieving of the main aim of the invention, i.e. satisfying the technical requirements of the above-mentioned Regulation no.65 or similar regulations, keeping constructive simplicity, energetic and materials saving, and increasing the efficiency. According to the tests carried out by the applicant, the solution of the present invention is the only one which provides an optimal irradiation at a low cost. Indeed, one has tried to direct horizontally the LEDs (on a plane parallel to the above mentioned rotation axis), providing the lighting device with suitable sliding contacts, with the results of having a too much complex and economically not attractive structure.

The applicant tried to utilize an "only" LED multidie, which is substantially constituted by many integrated LEDs, obtaining however a remarkable production of heat which entailed an increase of the dissipation section (and therefore of the weight, dimensions, efficiency, costs of the lighting device).

Analogously to the prior art, the device according to the invention comprises a bell-shaped transparent covering (or in general a cap) which covers the assembly of LEDs and the reflector body. Such a transparent covering (colored or not, depending on the use) can be the same of the devices of the prior art, which can be easily reconditioned by using the teachings of the present invention, to obtain the device of the present invention.

The present invention, owing to the foregoing, allows to simplified and optimize in innovative way the construction of a flashing light signaling supplementary device using LED light by managing a reduced number of components, innovating the system of the light emission, and the system of allocation and dissipation of the heat produced by the utilized LEDs, and cutting the management costs of the device in terms of increase in lifetime (100 times more than the rotating device using halogen lamp) and in terms of absorbed energy (around 10 times).

The preferred embodiment have been above described and some modifications of this invention has been suggested, but it should be understood that those skilled in the art can make variation and changes, without so departing from the related scope of protection, as defined by the following claims.

## Claims

1. Lighting device (100) comprising a light source (141, 142, 143) placed on a disposition plane and a semi-parabolic reflector body (120) for the conveying of the light within a predefined exit angular aperture of ± α of the light beam with respect to said disposition plane, and wherein the semi-parabolic reflector body (120) is suitable to be rotated around a rotation axis (150) that passes in correspondence of a center of said light source (141, 142, 143) and is perpendicular to said disposition plane, in such a way to obtain a light beam which spans a predefined maximal angle around said light source,
the lighting device being **characterized in that**:
- the light source is constituted by three or more LEDs (141, 142, 143) which are placed on corresponding application points on said horizontal plane and provide an overall emission beam;
- said rotation axis (150) passes substantially through the center of the circumference of maximum radius *r* passing through the application points of at the least three LEDs among said three or more LEDs and enclosing all said application points of said three or more LEDs (141, 142, 143);
- said maximum radius *r* is equal or larger than 2.3 mm;
- said semi-parabolic reflector body is a portion of a parabola having a parabolic symmetry axis (160) perpendicular to said rotation axis (150);
- said disposition plane whereon said three or more LEDs (141, 142, 143) are disposed is placed at a distance *d* from the focus of said parabola, distance *d* being predetermined in such a way that an application point of an equivalent source of said overall emission beam finds itself substantially on said focus.

2. Device according to claim 1, **characterized in that** three LEDs are used.

3. Device according to claim 1, **characterized in that** four LEDs are used.

4. Device according to claim 2 or 3, **characterized in that** said maximum radius *r* is comprised between 2.3 and 3.3 mm.

5. Device according to claim 4, **characterized in that** three LEDs are used and said maximum radius *r* is comprised between 2.5 and 2.9 mm.

6. Device according to claim 1, **characterized in that** six LEDs are used, and said maximum radius *r* is comprised between 3.8 and 5.2 mm.

7. Device according to claim 6, **characterized in that** six LEDs are used, and said maximum radius r is comprised between 4 and 4.8 mm.

8. Device according to any claim 1 to 7, **characterized in that** said pre-defined maximum angle is equal to 360° .

9. Device according to any claim 1 to 8, **characterized in that** said three or more LEDs (141,142,143) are Lambertian LEDs.

10. Device according to any claim 1 to 9, **characterized in that** said semi-parabolic reflector body (120) is a hollow body in polycarbonate.

11. Device according to claim 10, **characterized in that** the internal parabolic-section surface of said semi-parabolic reflector body (125) is reflecting and bright.

12. Device according to any claim 1 to 11, **characterized in that** in front of each LED of said three or more LEDs (141,142,143), at a predefined distance from it, an optical group is placed for focusing the light beam emitted from the LED.

13. Device according to any claim 1 to 12, **characterized in that** it comprises a transparent cap cover which covers said three or more LEDs (141,142,143) and the reflector body (120).

14. Device according to claim 13, **characterized in that** in said transparent cap cover an optical group is integrally formed, which is suitable to improve the distribution of the light over 360°.

15. Device according to any claim 1 to 12, **characterized in that** said three or more LEDs (141,142,143) are disposed on the vertexes of a regular polygon with corresponding three or more vertexes, on said disposition plane.
